(19) Europäisches Patentamt
European Patent Office
Office européen des brevets

(11) **EP 2 668 075 B1**

(12) **EUROPÄISCHE PATENTSCHRIFT**

(45) Veröffentlichungstag und Bekanntmachung des Hinweises auf die Patenterteilung:
**09.12.2015 Patentblatt 2015/50**

(21) Anmeldenummer: **12700828.2**

(22) Anmeldetag: **20.01.2012**

(51) Int Cl.:
**B60T 13/68** *(2006.01)*     **B60T 8/32** *(2006.01)*

(86) Internationale Anmeldenummer:
**PCT/EP2012/050824**

(87) Internationale Veröffentlichungsnummer:
**WO 2012/101040 (02.08.2012 Gazette 2012/31)**

(54) **VERFAHREN UND VORRICHTUNG ZUR REGELUNG EINER ELEKTROHYDRAULISCHEN BREMSANLAGE**

METHOD AND DEVICE FOR CONTROLLING AN ELECTROHYDRAULIC BRAKE SYSTEM

PROCÉDÉ ET DISPOSITIF POUR RÉGLER UN SYSTÈME DE FREINAGE ÉLECTROHYDRAULIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.01.2011 DE 102011003230**
**19.01.2012 DE 102012200705**

(43) Veröffentlichungstag der Anmeldung:
**04.12.2013 Patentblatt 2013/49**

(73) Patentinhaber: **Continental Teves AG & Co. oHG**
**60488 Frankfurt (DE)**

(72) Erfinder:
• **BÖHM, Jürgen**
**65558 Oberneisen (DE)**
• **KAUFMANN, Tom**
**55566 Ippenschied (DE)**

(74) Vertreter: **Thiel, Linda**
**Continental Teves AG & Co. oHG**
**Guerickestraße 7**
**60488 Frankfurt (DE)**

(56) Entgegenhaltungen:
**DE-A1-102005 018 649     DE-C1- 4 335 769**
**DE-C1- 19 543 583**

**Beschreibung**

Die Erfindung betrifft ein Verfahren zur Regelung einer elektrohydraulischen Bremsanlage gemäß dem Oberbegriff von Anspruch 1, eine Vorrichtung zur Regelung einer elektrohydraulischen Bremsanlage gemäß dem Oberbegriff von Anspruch 8 und eine elektrohydraulischen Bremsanlage.

In der Kraftfahrzeugtechnik finden "Brake-by-wire"-Bremsanlagen eine immer größere Verbreitung. Solche Bremsanlagen umfassen oftmals neben einem durch den Fahrzeugführer betätigbaren Hauptbremszylinder eine elektrisch steuerbare Druckbereitstellungseinrichtung, mittels welcher in der Betriebsart "Brake-by-wire" eine Betätigung der Radbremsen, entweder direkt oder über den Hauptbremszylinder, stattfindet. Um dem Fahrzeugführer in der Betriebsart "Brake-by-wire" ein angenehmes Pedalgefühl zu vermitteln, umfassen die Bremsanlagen üblicherweise eine Bremspedalgefühl-Simulationseinrichtung, welche z.B. mit dem Hauptbremszylinder in Wirkverbindung steht. Zur Ansteuerung der Bremsanlage ist ein Sollwertgeber vorgesehen, welcher z.B. die elektrischen Signale von ein oder mehreren Sensoren zur Erfassung des Fahrerbremswunsches (Betätigungswunsches) auswertet, um einen Sollwert für die Ansteuerung der Druckbereitstellungseinrichtung zu bestimmen. Bei diesen Bremsanlagen kann die Druckbereitstellungseinrichtung jedoch auch ohne aktives Zutun des Fahrers aufgrund elektronischer Signale betätigt werden. Diese elektronischen Signale können beispielsweise von einem elektronischen Stabilitätsprogramm (ESC) oder einem Abstandsregelsystem (ACC) ausgegeben werden, so dass der Sollwertgeber einen Sollwert zur Ansteuerung der Druckbereitstellungseinrichtung anhand dieser Signale bestimmt.

Aus der internationalen Patentanmeldung WO 2008/025797 A1 ist ein Bremssystem bekannt, in welchem vorgeschlagen wird, das zur elektrischen Regelung des in einem zur Betätigung des Hauptbremszylinders verwendeten Zwischenraum eingesteuerten Druckes benötigte Druckmittel in der Druckbereitstellungseinrichtung drucklos bereitzuhalten und bei Bedarf unter einen höheren Druck zu setzen, um auf eine aufwändige und energetisch ungünstige Zwischenspeicherung hydraulischer Stellenergie verzichten zu können. Die Druckbereitstellungseinrichtung wird hierzu durch eine Zylinder-Kolben-Anordnung gebildet, deren Kolben durch einen elektromechanischen Aktuator betätigbar ist. Die Bremsanlage umfasst einen Drucksensor zur Erfassung des Ist-Druckes der Druckbereitstellungseinrichtung. Eine Regelung des Bremssystems, insbesondere der Druckbereitstellungseinrichtung, wird nicht beschrieben.

Die in der DE 10 2010 040 097 A1 beschriebene Bremsanlage umfasst einen Hauptbremszylinder und eine durch eine Zylinder-Kolben-Anordnung gebildete Druckbereitstellungseinrichtung, deren Kolben durch einen elektromechanischen Aktuator betätigbar ist. Jede Radbremse ist mit dem Hauptbremszylinder und der Druckbereitstellungseinrichtung hydraulisch verbindbar. Auch hier sind Drucksensoren zur Erfassung des Ist-Druckes der Druckbereitstellungseinrichtung vorgesehen.

Ein Verfahren zur Regelung der Druckbereitstellungseinrichtung wird auch hier nicht näher beschrieben.

In der unveröffentlichten DE 10 2011 076 675.8 ist ein Verfahren zur Regelung eines elektrohydraulischen Bremssystems für Kraftfahrzeuge mit einer elektronisch ansteuerbaren Druckbereitstellungseinrichtung, welche mit hydraulisch betätigbaren Radbremsen verbunden ist, beschrieben. Die Druckbereitstellungseinrichtung umfasst eine Zylinder-Kolben-Anordnung mit einem hydraulischen Druckraum, deren Kolben durch einen elektromechanischen Aktuator relativ zu einer Ruheposition verschiebbar ist. Zur Regelung der Druckbereitstellungseinrichtung ist eine Reglervorrichtung mit einem Druckregler vorgesehen, welche auf Grundlage eines Druck-Sollwertes und eines Druck-Istwertes der Druckbereitstellungseinrichtung die Regelung durchführt. Hierzu muss also der Druck-Istwert, z.B. mittels eines Drucksensors wie in den oben genannten Bremsanlagen, bestimmt werden.

Die DE 195 43 583 C1 betrifft eine Bremsdruck-Steuereinrichtung für ein Straßenfahrzeug, die für jede Radbremse ein elektromotorisch antreibbares hydraulisches Bremsdruck-Stellglied umfasst. Auch hier wird eine Druckregelung der radindividuellen Bremsdruck-Stellglieder durchgeführt.

Es ist Aufgabe der vorliegenden Erfindung, ein Verfahren und eine Vorrichtung zur Regelung einer elektrohydraulischen Bremsanlage mit einer elektronisch ansteuerbaren Druckbereitstellungseinrichtung bereitzustellen, welches/welche eine Einregelung eines vorgegebenen Druck-Sollwertes in der Druckbereitstellungseinrichtung ermöglicht, ohne dass eine Bestimmung eines Druck-Istwertes der Druckbereitstellungseinrichtung notwendig ist. Insbesondere soll die Bremsanlage ohne einen Drucksensor zur Messung des Druckes der Druckbereitstellungseinrichtung auskommen.

Diese Aufgabe wird erfindungsgemäß durch ein Verfahren gemäß Anspruch 1, eine Vorrichtung gemäß Anspruch 8 und eine entsprechende Bremsanlage gemäß Anspruch 12 gelöst.

Der Erfindung liegt der Gedanke zugrunde, eine Positionsregelung des Aktuators durchzuführen, welcher der Aktuatorposition-Istwert und ein Aktuatorposition-Sollwert, der anhand des vorgegebenen Druck-Sollwerts bestimmt wird, zugrunde liegen. Um die tatsächlichen Gegebenheiten zu berücksichtigen, wird bei der Bestimmung des Aktuatorposition-Sollwerts zusätzlich der Aktuatormoment-Istwert berücksichtigt. Hierdurch wird sozusagen eine zweite unabhängige Eingangsgröße berücksichtigt.

Gemäß einer bevorzugten Ausführungsform des erfindungsgemäßen Verfahrens wird auch ein Aktuatormoment-Istwert des elektromechanischen Aktuators ermittelt und zur Regelung herangezogen.

Für eine einfache und schnelle Bestimmung des Aktuatorposition-Sollwerts wird der Aktuatorposition-Sollwert bevorzugt anhand einer vorgegebenen Druck-Weg-Kennlinie aus dem vorgegebenen Druck-Sollwert bestimmt.

Gemäß einer bevorzugten Weiterbildung des erfindungsgemäßen Verfahrens wird anhand des Aktuatormoment-Istwerts eine Korrektur eines aus dem Druck-Sollwert berechneten (ersten) Aktuatorposition-Sollwerts durchgeführt. Dabei wird der (erste) Aktuatorposition-Sollwert besonders bevorzugt ausschließlich aus dem Druck-Sollwert berechnet. Eine Anpassung an die aktuellen Gegebenheiten geschieht mittels der Korrektur.

Aus dem Druck-Sollwert wird zunächst bevorzugt ein Aktuatormoment-Sollwert bestimmt, welcher dann zur Korrektur des (ersten) Aktuatorposition-Sollwerts herangezogen wird.

Bevorzugt wird ein Korrektur-Aktuatorpositionswert anhand des Druck-Sollwerts, des Aktuatormoment-Istwerts und eines Aktuator-Beschleunigungsmoments bestimmt. Dieser Korrektur-Aktuatorpositionswert wird dann besonders bevorzugt zu dem aus dem Druck-Sollwert berechneten Aktuatorposition-Sollwert hinzuaddiert. Vorteilhafterweise wird dieser sich ergebende Aktuatorpositionswert als Aktuatorposition-Sollwert der Positionsregelung verwendet.

Es ist bevorzugt, dass der Korrektur-Aktuatorpositionswert durch Integration einer Differenz gebildet wird, welche sich durch Subtraktion von dem aus dem Druck-Sollwert berechneten Aktuatormoment-Sollwert und der Differenz aus dem Aktuatormoment-Istwert und einem Aktuator-Beschleunigungsmoment ergibt.

Vorteilhafterweise wird das erfindungsgemäße Verfahren in einer Bremsanlage für Kraftfahrzeuge durchgeführt, die in einer sog. "Brake-by-wire"-Betriebsart sowohl vom Fahrzeugführer als auch unabhängig vom Fahrzeugführer ansteuerbar ist, vorzugsweise in der "Brake-by-wire"-Betriebsart betrieben wird und in mindestens einer Rückfallbetriebsart betrieben werden kann, in der nur der Betrieb durch den Fahrzeugführer möglich ist.

Ein Vorteil der Erfindung ist es, dass zur Einregelung des vorgegebenen Druck-Sollwerts in der Druckbereitstellungseinrichtung kein Druck-Istwert der Druckbereitstellungseinrichtung bestimmt werden muss. Die Regelung basiert allein auf den Signalen des elektromechanischen Aktuators, z.B. dem Aktuatormoment und der Aktuatorposition und daraus ableitbaren Größen, welche aufgrund der Ansteuerung üblicherweise sowieso verfügbar sind. Die notwendige Ersatzgröße für die Istdruckinformation wird ausschließlich auf der Basis der Aktuatorsignale ermittelt. Hierdurch kann auf einen Drucksensor zur Messung des Druckes der Druckbereitstellungseinrichtung in der Bremsanlage verzichtet werden, wodurch die Herstellungskosten reduziert werden.

Bevorzugt ist die Radbremse bzw. sind die Radbremsen hydraulisch an den Druckraum der Druckbereitstellungseinrichtung angeschlossen. So wird aus dem Druckraum verdrängtes Druckmittelvolumen direkt in die Radbremse(n) verschoben, wodurch Drosseleffekte durch Reibungen o.ä. vermieden werden. Zwischen einer, insbesondere jeder, Radbremse und dem Druckraum ist bevorzugt ein elektrisch ansteuerbares Einlassventil angeordnet, mit welchem die Radbremse von dem Druckraum hydraulisch abtrennbar ist.

Alternativ ist es bevorzugt, dass die Radbremse(n) trennbar mit einer hydraulischen (Ausgangs)Druckkammer eines Hauptbremszylinders oder einer Schwimmkolben-Anordnung hydraulisch verbunden ist/sind, wobei der Hauptbremszylinderkolben bzw. die Eingangsdruckseite der Schwimmkolben-Anordnung von dem Druck des Druckraums der Druckbereitstellungseinrichtung betätigbar ist. Die Radbremse(n) ist/sind dann nicht direkt mit dem Druckraum der Druckbereitstellungseinrichtung hydraulisch verbunden, ist/sind aber mittels der Druckbereitstellungseinrichtung betätigbar.

Bevorzugt ist die, insbesondere jede, Radbremse, z.B. über ein elektrisch ansteuerbares Auslassventil, mit einem Bremsflüssigkeitsvorratsbehälter verbindbar.

Ebenso ist es bevorzugt, dass der hydraulische Druckraum der Zylinder-Kolben-Anordnung über mindestens ein elektrisch ansteuerbares Ventil mit einem Bremsflüssigkeitsvorratsbehälter verbindbar ist.

Die Erfindung betrifft weiter eine Vorrichtung gemäß Anspruch 9.

Bevorzugt umfasst die Regelvorrichtung ein erstes Funktionsmodul, in welchem ein erster Aktuatorposition-Sollwert aus dem Druck-Sollwert ($P_{V,Soll}$) bestimmt wird und in welchem anhand des Aktuatormoment-Istwerts eine Korrektur des ersten Aktuatorposition-Sollwerts durchgeführt wird, um betriebsbedingte Abweichungen des tatsächlichen Zusammenhangs zwischen Druck und Aktuatorposition (Druck-/Volumen-Zusammenhang) von dem in der Bestimmung angenommenen bzw. zugrundegelegten Zusammenhang zu berücksichtigen. Der erste Aktuatorposition-Sollwert wird besonders bevorzugt anhand einer vorgegebenen Druck-Weg-Kennlinie aus dem Druck-Sollwert bestimmt.

Bevorzugt werden dem ersten Funktionsmodul zusätzlich die Schaltzustände der den Radbremsen zugeordneten Ventile und/oder eine Information, ob eine Druckregelfunktion aktiv ist und gegebenenfalls welche Druckregelfunktion aktiv ist, zugeführt. Besonders bevorzugt werden die Schaltzustände und/oder die Information zur Bestimmung des ersten Aktuatorposition-Sollwerts herangezogen.

Gemäß einer Weiterbildung der erfindungsgemäßen Vorrichtung umfasst die Regelvorrichtung ein zweites Funktionsmodul, in welchem ein Korrektur-Aktuatorpositionswert anhand des Druck-Sollwerts, des Aktuatormoment-Istwerts und eines Aktuator-Beschleunigungsmoments bestimmt wird. Mit dem Korrektur-Aktuatorpositionswert ist eine motorsignalbasierte Korrektur des ersten Aktuatorposition-Sollwerts möglich.

Die Erfindung betrifft auch eine Bremsanlage, in der ein erfindungsgemäßes Verfahren durchgeführt wird oder welche eine erfindungsgemäße Vorrichtung umfasst.

Weitere bevorzugte Ausführungsformen der Erfindung ergeben sich aus den Unteransprüchen und der nachfolgenden Beschreibung anhand von Figuren.

Es zeigen schematisch:

Fig. 1 ein Prinzipschaltbild einer beispielsgemäßen Bremsanlage zur Durchführung eines erfindungsgemäßen Verfahrens, und

Fig. 2 eine beispielsgemäße Regelvorrichtung zur Durchführung eines erfindungsgemäßen Verfahrens

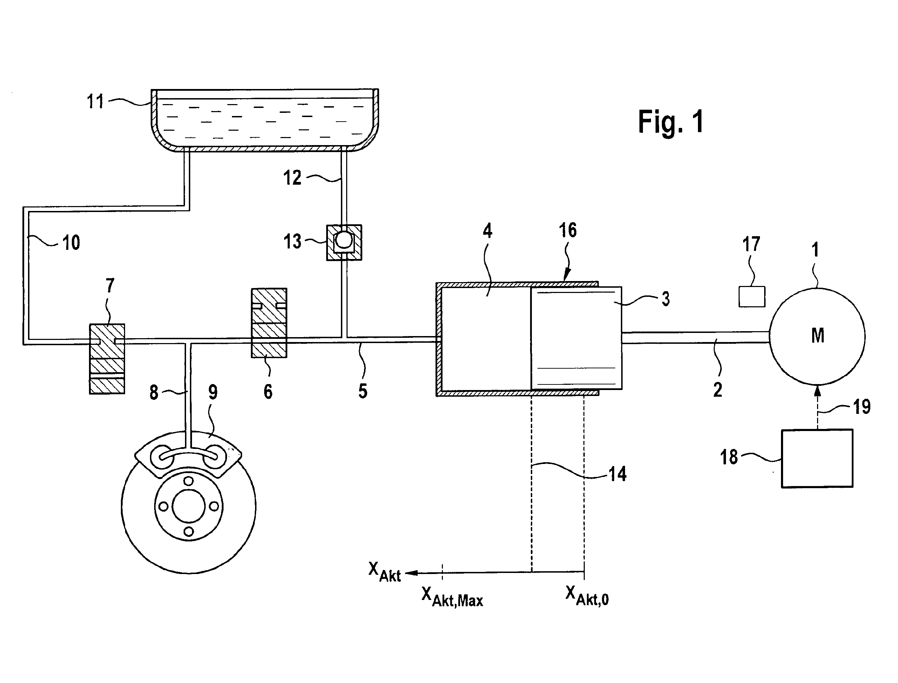

In Fig. 1 ist ein Prinzipschaltbild einer beispielsgemäßen Bremsanlage für Kraftfahrzeuge zur Durchführung eines erfindungsgemäßen Verfahrens schematisch dargestellt. Die Bremsanlage umfasst ein nicht dargestelltes Bremspedal und eine elektronisch ansteuerbare Druckbereitstellungseinrichtung 16, mittels welcher ein Druck zur Betätigung zumindest einer hydraulisch betätigbaren Radbremsen 9 erzeugt werden kann. Die Betätigung des Bremspedals bzw. der Fahrerbremswunsch wird erfasst und die elektronisch ansteuerbare Druckbereitstellungseinrichtung 16 entsprechend elektronisch angesteuert. Beispielsgemäß wird die elektronisch ansteuerbare Druckbereitstellungseinrichtung 16 durch eine Zylinder-Kolben-Anordnung mit einem hydraulischen Druckraum 4 und einem Tauchkolben 3 gebildet. Mittels eines elektromechanischen Aktuators, z.B. eines Elektromotors 1 mit einem geeigneten Getriebe 2, ist der Tauchkolben 3 verschiebbar, so dass ein Druck in dem hydraulischen Druckraum 4 einstellbar ist. Getriebe 2 ist z.B. als ein Rotations-Translations-Getriebe ausgeführt. Die Radbremse 9 ist bevorzugt über eine Leitung 8, 5 mit dem Druckraum 4 der Druckbereitstellungseinrichtung 16 hydraulisch verbindbar oder verbunden. Alternativ ist es denkbar, dass die Radbremse(n) über eine Leitung mit einem (Ausgangs)Druckraum eines Hauptbremszylinders oder einer Trennkolben-Anordnung hydraulisch verbindbar oder verbunden ist, wobei ein Kolben des Hauptbremszylinders oder der Trennkolben-Anordnung über einen (Eingangs)Druckraum / Zwischenraum durch die Druckbereitstellungseinrichtung betätigbar ist (nicht dargestellt, siehe z.B. WO 2008/025797 A1 oder DE 10 2009 054 985.4). In allen Fällen wird eine Druckanforderung $P_{V,Soll}$ (z.B. durch den Fahrer oder eine Bremsregelfunktion) elektronisch mit Hilfe der elektronisch ansteuerbaren Druckbereitstellungseinrichtung 16 in einen Druck zur Beaufschlagung der Radbremse(n) 9 umgesetzt.

Weiterhin umfasst die beispielsgemäße Bremsanlage der Fig. 1 zur Bremsdruckmodulation an der Radbremse 9 ein in der Leitung 5 angeordnetes Einlassventil 6 und ein Auslassventil 7, wobei das Auslassventil 7 die Radbremse 9 bei Bedarf mit einem Druckmittelvorratsbehälter 11 verbinden kann. Der Druckraum 4 der Druckbereitstellungseinrichtung 16 ist zum Nachsaugen von Druckmittel aus dem Druckmittelvorratsbehälter 11 in den Druckraum 4 über eine Verbindungsleitung 12 mit einem in Richtung des Druckmittelvorratsbehälters 11 schließenden Rückschlagventil 13 mit dem Druckmittelvorratsbehälter 11 verbunden.

Das Bremspedal wirkt vorteilhafterweise mit einer Bremspedalgefühl-Simulationseinrichtung zusammen, welcher dem Fahrer ein angenehmes Pedalgefühl vermittelt. Bei der Betätigung des Bremspedals zur Anforderung eines Bremsdruckes ist der Fahrer in der "Brake-by-wire"-Betriebsart nicht direkt mit der Radbremse 9 verbunden, sondern betätigt eine Bremspedalgefühl-Simulationseinrichtung, die eine geeignete Pedalcharakteristik aufweist, sodass dem Fahrer eine ausreichend genaue Dosierung des angeforderten Bremswunsches ermöglicht wird.

Indem bei einer Bremsung der Kolben 3 der Druckbereitstellungseinrichtung 16 mittels des Elektromotors 1 um einen Weg $X_{Akt}$ aus seiner Ruheposition $X_{Akt,0}$ in eine Position 14 verschoben wird, wird ein bestimmtes Volumen von Bremsflüssigkeit aus dem Druckraum 4 über die Leitung 5 und ein zunächst geöffnetes Einlassventil 6 in den Radbremskreis 8 und somit die Radbremse 9 verschoben. Damit wird in der Radbremse 9 ein Bremsdruck erzeugt.

Ein Bremsdruckabbau kann erfolgen, indem der Kolben 3 wieder in Richtung der Ruheposition $X_{Akt,0}$ zurückgefahren wird. Ein schneller Bremsdruckabbau, wie er z.B. im Falle einer Anti-Blockier-Regelung (ABS: Anti-Blockier-System) benötigt wird, ist aber auch über die Ventilkombination 6, 7 möglich, indem das Einlassventil 6 geschlossen und das Auslassventil 7 für eine bestimmte Zeit geöffnet wird. Dann strömt Bremsflüssigkeit aus der Radbremse 9 über die Leitung 8 durch das Auslassventil 7 und die Leitung 10 in den Druckmittelvorratsbehälter 11. Diese Maßnahme des Druckabbaus ist insbesondere dann sinnvoll, wenn der Druckraum 4 mit mehreren Radbremsen verbunden ist, deren Bremsdruck radindividuell geregelt werden soll.

Grundsätzlich kann die in Fig. 1 dargestellte Bremsanlage um beliebig viele Radbremsen 9 erweitert werden, indem weitere Leitungen 5 zu Radbremskreisen 8 geführt werden, wobei jede Radbremse 9 bevorzugt über ein individuelles Ventilpaar aus Einlassventil 6 und Auslassventil 7 verfügt. Um aus Sicherheitsgründen eine Mehrkreisigkeit der Bremsanlage bereitzustellen, kann die Druckbereitstellungseinrichtung auch zwei oder mehr Kolben 3 und zwei oder mehr Druckräume 4 umfassen. Für einen PKW ist eine Zweikreisigkeit sinnvoll, wobei jeweils zwei Radbremsen 9 mit einer von zwei Druckkammern 4 verbunden sind. Die Druckbereitstellungseinrichtung kann dann als Kolben-Zylinder-Anordnung mit zwei Kolben (ein Kolben wird durch den Aktuator direkt betätigt) und zwei Druckräumen oder durch zwei Kolben-ZylinderAnordnungen mit je einem Kolben und einem Druckraum ausgeführt sein. Ebenfalls sind alternative Ausführungsformen bei der Ausgestaltung der Druckregelventile denkbar.

Weitere beispielsgemäße Bremsanlagen zur Durchführung eines erfindungsgemäßen Verfahrens sind in der WO 2008/025797 A1 und der unveröffentlichten DE 10 2009 054 985 beschrieben.

Beispielsgemäß ist eine Messeinrichtung 17 vorgesehen, mittels welcher eine Position oder Lage oder Stellung des Aktuators 1, z.B. die Motorwinkelposition bzw. der Rotorlagewinkel des Elektromotors, erfasst wird. Bei dem Elektromotor des Aktuators 1 handelt es sich bevorzugt um einen elektronisch kommutierten Motor. Es wird im Weiteren beispielsgemäß davon ausgegangen, dass eine feldorientierte Regelung zum Einsatz kommt. Im Zusammenhang mit dieser feldorientierten Regelung werden das Motormoment $M_{Akt}$, z.B. aus dem Motorstrom bzw. den Motorströmen, und die aktuelle Motorwinkelposition $\varphi_{Mot}$, z.B. mittels eines Sensors, ermittelt.

Basierend auf der Motorwinkelposition $\varphi_{Mot}$ wird die aktuelle Position / der aktuelle Weg $X_{Akt}$ des Tauchkolbens 3 mittels der Gleichung

$$X_{Akt} = \nu * (\varphi_{Mot} - \varphi_{Mot,0})$$

ermittelt. Dabei repräsentieren der Faktor $\nu$ die Übersetzung des Getriebes 2, welche vorgegeben ist, und der Wert $\varphi_{Mot,0}$ den Winkeloffsetwert, welcher zur Ruheposition $X_{Akt,0}$ des Aktuators korrespondiert und welcher bekannt ist oder bestimmt werden kann. Zur vereinfachenden Darstellung von Formeln wird üblicherweise dieser Wert zu $X_{Akt,0} = 0$ angenommen. Durch ein- bzw. zweimalige zeitliche Differentiation der Motorwinkelposition $\varphi_{Mot}$ oder der Aktuatorposition/- weges $X_{Akt}$ erhält man die Geschwindigkeit $\omega_{Akt}$ bzw. die Beschleunigung des Aktuators.

Außerdem umfasst die Bremsanlage beispielsgemäß eine elektronische Steuer- und Regeleinheit 18, welcher ein Druck-Sollwert $P_{V,Soll}$ für die Druckbereitstellungeinrichtung 16 und die Aktuatorgrößen Position $X_{Akt}$ (oder Motorwinkelposition $\varphi_{Mot}$) und Moment $M_{Akt}$ zugeführt werden und in welcher eine Stellgröße ($\omega_{Akt,Soll}$, $M_{Akt,Soll}$) zur Ansteuerung 19 der Druckbereitstellungseinrichtung 16 bzw. des Aktuators 1 gebildet wird.

Die Notwendigkeit einen vorgegebenen Druck $P_{V,Soll}$ bzw. Druckverlauf $P_{V,Soll}(t)$ in der Druckbereitstellungseinrichtung 16 mittels eines Regelungsverfahrens einzustellen, ergibt sich immer dann, wenn der Fahrer mittels Betätigung des Bremspedals einen allgemeinen Bremsdruck für alle Räder des Kraftfahrzeugs anfordert oder wenn diese Druckanforderung durch eine Fahrerassistenzfunktion (z.B. adaptive cruise control (ACC), hill start assist (HSA), hill descent control (HDC) etc.) gestellt wird oder wenn eine spezielle radindividuelle Bremsdruckregelfunktion, z.B. eines Antiblockiersystems (ABS), eines Traktionskontrollsystems (Traction Control Systems: TCS) oder elektronischen Stabilitätprogramms (ESP, ESC), aktiv wird. Eine Fahrerassistenzfunktion fordert zumeist einen "globalen" Bremsdruck für alle Radbremsen 9 an, ähnlich wie der Fahrer mit Hilfe einer mit dem Bremspedal ausgelösten Grundbremsanforderung. In diesen Fällen wird der Druck bei geöffneten Einlassventilen 6 an allen Bremskreisen 8 gleichermaßen durch Verfahren des Kolbens 3 erzeugt. Die Antiblockierfunktion (ABS) begrenzt oder reduziert im Allgemeinen nur den in Druckraum 4 aufgebrachten Druck für einzelne Radbremsen 9, um diese in einem gewünschten optimalen Bremsschlupf zu halten. Bei der Traktionskontrolle (TCS) werden einzelne Radbremsen 9, die aufgrund eines zu hohen Antriebsmomentes zum Durchdrehen neigen, gezielt abgebremst. Dazu wird in der Bremsanlage durch Vorfahren des Kolbens 3 aktiv ein Druck in dem Druckraum 4 erzeugt, der nicht vom Fahrer angefordert wurde. Der Druck aus Druckraum 4 wird dann radindividuell über die Ventile 6, 7 in die Radbremse 9 des zu bremsenden Rades geleitet, während die Radbremsen 9 der anderen Räder, die ungeregelt bleiben, mit Hilfe ihrer Einlassventile 6 vom Druckraum 4 abgetrennt werden. Ähnliches gilt für das elektronische Stabilitätsprogramm (ESP, ESC). Hier werden Bremsdrücke ebenfalls aktiv und radselektiv an einzelnen Radbremsen 9 aufgebracht, um die Dynamik des Fahrzeugs um die Hochachse zu beeinflussen. In allen Fällen gilt, dass vorteilhafterweise der Druck in Druckraum 4 so einzustellen ist, dass die Radbremse mit der höchsten Bremsdruckanforderung sicher mit dem notwendigen Druck versorgt werden kann. An einer Radbremse, die weniger Druck benötigt als in dem Druckraum 4 erzeugt wird, wird der Druck dadurch begrenzt, dass das der Radbremse zugehörige Einlassventil 6 dauerhaft oder zeitweise geschlossen wird. Sollte ein Rad dann einen geringeren Druck als den bereits eingestellten Druck benötigen und ist der Druck der Druckbereitstellungseinrichtung 30 höher als der gewünschte Radbremsdruck, so wird Druckmittel mittels des zugehörigen Auslassventils 7 aus der Radbremse 9 in den Behälter 11 abgelassen.

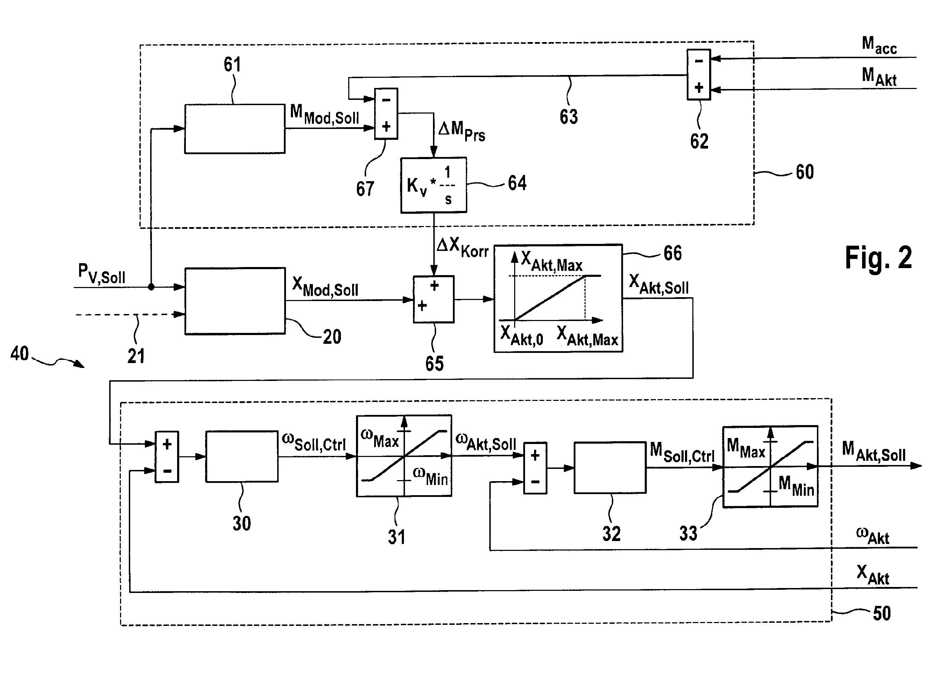

Eine beispielsgemäße Regelvorrichtung zur Durchführung eines erfindungsgemäßen Verfahrens ist schematisch in Fig. 2 dargestellt. Regelvorrichtung 40 dient dem Einstellen eines gewünschten Solldruckes bzw. Solldruckverlaufs $P_{V,Soll}$ der Druckbereitstellungseinrichtung 16 durch geeignete Ansteuerung des Aktuators 1. Der Wert für den Solldruck $P_{V,Soll}$ wird von einem Sollwertgeber vorgegeben und ergibt sich z.B. aufgrund der oben beschriebenen Anforderungen. Regelvorrichtung 40 umfasst im Wesentlichen zwei funktionale Gruppen: ein Funktionsmodul "Druck-/Volumen-Kennlinie" 20 und ein Funktionsmodul "Aktuatorpositionsregelung" 50. Vorteilhafterweise umfasst die Regelvorrichtung 40 beispielsgemäß noch ein Funktionsmodul "Motorsignalbasierte Kennlinienkorrektur" 60. Die Funktionsmodul 20, 50 und 60 werden im Folgenden näher erläutert. Das entsprechende Regelungsverfahren basiert, neben dem vorgegebenen Solldruck $P_{V,Soll}$, ausschließlich auf Aktuatorsignalen, nämlich der Aktuatorposition $X_{Akt}$ und vorteilhafterweise zusätzlich dem Aktuatormoment $M_{Akt}$. Ein gemessener Istdruck der Druckbereitstellungseinrichtung 16 wird nicht herangezogen.

Im Funktionsmodul "Druck-/Volumen-Kennlinie" 20 findet eine Umrechnung des Solldrucks $P_{V,Soll}$ in eine korrespondierende Aktuatorsollposition $X_{Mod,Soll}$ mittels eines Modells für die (die betrachtete Bremsanlage charakterisierende) Bremsdruck-/Volumenaufnahme-Charakteristik statt. Diese Bremsdruck-/Volumenaufnahme-Charakteristik ist vorgegeben und z.B. in der Steuer- und Regeleinheit 18 in Form eines funktionalen Zusammenhangs oder einer Kennlinie (Druck-Weg-Zusammenhang bzw. Druck-Position-Zusammenhang) abgelegt.

Um, z.B. betriebsbedingte, Abweichungen der aktuellen Bremsencharakteristik, d.h. des aktuellen Druck-/Volumen-Zusammenhangs, von der vorgegebenen Bremsdruck-/Volumenaufnahme-Kennlinie bei der Bestimmung einer Aktuatorsollposition zu berücksichtigen, ist beispielsgemäß das Funktionsmodul "Motorsignalbasierte Kennlinienkorrektur" 60 vorgesehen. Das Ausgangssignal des Funktionsmoduls "Motorsignalbasierte Kennlinienkorrektur" 60 ist ein Korrekturweg $\Delta X_{Korr}$, welcher der Aktuatorsollposition $X_{Mod,Soll}$ des Funktionsmoduls "Druck-/Volumen-Kennlinie" 20 in Block 65 additiv überlagert wird. In Block 66 findet gegebenenfalls eine Begrenzung auf die maximal mögliche Aktuatorposition $X_{Akt,max}$ statt, wobei das Ausgangssignal des Blocks 66, die Aktuatorsollposition $X_{Akt,Soll,}$ ein Eingangssignal für das nachfolgende Funktionsmodul "Aktuatorpositionsregelung" 50 darstellt.

Zum Beispiel führen auch radindividuelle Druckregelfunktionen (wie z.B. eine Antiblockierregelung (ABS) oder eine Stabilitätskontrolle (ESC)), welche über die der entsprechenden Radbremse 9 zugeordnete Ventilkombination 6, 7 vorgenommen werden, zu einer Änderung des Zusammenhangs zwischen dem Weg des Kolbens (Aktuatorweg $X_{Akt}$) und dem sich einstellenden Druck $P_V$ in der Druckbereitstellungseinrichtung 16 und können durch die Kennlinienkorrektur 60 kompensiert werden.

Um den Korrekturaufwand durch das Funktionsmodul "Motorsignalbasierte Kennlinienkorrektur" 60 möglichst gering zu halten, werden gemäß einem besonders vorteilhaften Ausführungsbeispiel der Erfindung dem Funktionsmodul "Druck-/Volumen-Kennlinie" 20 neben dem Solldrucksignal $P_{V,Soll}$ zusätzlich auch die Schaltzustände der den Radbremsen 9 zugeordneten Ventilkombinationen 6, 7 zugeführt. Diese zusätzlichen (optionalen) Informationen sind in Fig. 2 durch den gestrichelten Pfeil 21 angedeutet. Anhand der Schaltinformationen kann ermittelt werden, wie viele Radbremsen mit der Druckbereitstellungseinrichtung 16 verbunden sind. Unter Berücksichtigung der jeweiligen, den Radbremsen zugeordneten Druck-Volumen-Charakteristiken kann nun ermittelt werden, welches Volumen bzw. welche Volumenänderung für den vorgegebenen Solldruck bzw. die Solldruckänderung in die mit der Druckbereitstellungseinrichtung 16 verbundenen Radbremsen verschoben werden muss. Hierdurch wird eine genauere Regelung des Druckes $P_V$ durch die Positionsvorgabe $X_{Mod,Soll}$ des Funktionsmodul "Druck-/Volumen-Kennlinie" 20 erzielt und so ein reduzierter Korrekturaufwand durch das Funktionsmodul "Motorsignalbasierten Kennlinienkorrektur" 60 erreicht.

Im beispielsgemäßen Funktionsmodul "Motorsignalbasierten Kennlinienkorrektur" 60 wird genutzt, dass für die hier betrachtete Anordnung, bei welcher mittels eines elektromechanischen Aktuators 1, z.B. eines Elektromotors mit einem geeigneten Getriebe, ein Druck in einem hydraulischen Druckraum 4 einstellbar ist, ein proportionaler Zusammenhang zwischen dem im Druckraum 4 eingestellten Druck $P_V$ und dem Motormoment $M_{Akt}$ gegeben ist, da der Druck $P_V$ zu einer Belastung des Aktuators 1 durch ein Moment $M_{Prs,Last}$ führt, das der Motor durch Aufbringen eines entsprechenden Gegenmoments kompensieren muss. Aus dem dem Funktionsmodul 60 zugeführten Solldruck $P_{V,Soll}$ wird in Block 61 unter Annahme des proportionalen Zusammenhangs ein entsprechendes Motorsollmoment $M_{Mod,Soll}$ bestimmt, wobei z.B. die Übersetzung $\nu$ des Getriebes 2, die Fläche des Kolbens 3 sowie die wirkungsgradbedingte Erhöhung (geforderter Druckaufbau) bzw. Verringerung (geforderter Druckaufbau) des Motormoments berücksichtigt werden. Weiterhin wird in Block 62 des Funktionsmoduls 60 aus dem, z.B. über den Motorstrom, ermittelten Motormoment $M_{Akt}$, welches dem Funktionsmodul 60 zugeführt wird, und einem die Beschleunigung des Aktuators repräsentierenden Beschleunigungsmoment $M_{acc}$, welches z.B. aus einem vorgegebenen Trägheitsmoment des Aktuators und der aus der Aktuatorposition $X_{Akt}$ durch zweimalige zeitliche Differentiation bestimmten Aktuatorbeschleunigung bestimmt wird, die Differenz gebildet, und das sich ergebende Momentensignal 63 in Block 67 von dem Motorsollmoment $M_{Mod,Soll}$ des Blocks 61 abgezogen. Aus dem sich so ergebenden Differenzmoment $\Delta M_{Prs}$ wird in Modul 64 der Korrekturweg $\Delta X_{Korr}$ aufintegriert, der - wie oben bereits beschrieben - zur Korrektur der Aktuatorsollposition $X_{Mod,Soll}$ des Funktionsmoduls 20 herangezogen wird (Block 65).

Das Grundprinzip der beispielsgemäßen "Motorsignalbasierten Kennlinienkorrektur" 60 arbeitet in der Form, dass solange das aus $M_{Akt}$ und $M_{Acc}$ gebildete Momentensignal 63 ($M_{Akt}-M_{Acc}$) nicht dem geforderten Sollmomentensignal $M_{Mod,Soll}$ entspricht, in Abhängigkeit von deren Differenz $\Delta M_{Prs}$ der Korrekturweg $\Delta X_{Korr}$ aufintegriert wird. Ist die Momentendifferenz $\Delta M_{Prs}$ gleich Null, so wird der Korrekturweg $\Delta X_{Korr}$ nicht mehr verändert. In diesem Fall entspricht die Differenz $M_{Akt}-M_{Acc}$ dem geforderten Signal $M_{Mod,Soll}$, was wiederum bedeutet, dass der geforderte Sollwert $P_{V,Soll}$ für den Druck $P_V$

der Druckbereitstellungseinrichtung 16 durch den Aktuator 1 eingestellt wurde.

Das Funktionsmodul "Aktuatorpositionsregelung" 50 umfasst beispielsgemäß einen Positionsregler 30, dem ein (Motor)Drehzahlregler 32 unterlagert ist. Dem Positionsregler 30 werden die Sollposition $X_{Akt,Soll}$ des Aktuators und die aktuelle Istposition $X_{Akt}$ des Aktuators zugeführt. Der Positionsregler 30 regelt die Abweichung zwischen der geforderten Sollposition $X_{Akt,Soll}$ und Istposition $X_{Akt}$ durch Vorgabe einer Soll(motor)drehzahl $\omega_{Soll,Ctrl}$ ein, welche einer Begrenzungsfunktion 31 zur Begrenzung auf die minimal bzw. maximal zulässige Solldrehzahl $\omega_{Min}$ bzw. $\omega_{Max}$ zugeführt wird. Die Ausgangsgröße des Positionsreglers 30 inklusive Begrenzungsfunktion 31 ist der Sollwert für die Motordrehzahl $\omega_{Akt,Soll}$ des Aktuators 1, die dem Drehzahlregler 32 als Eingangsgröße übergeben wird. Weitere Eingangsgröße des Drehzahlreglers 32 ist die Istmotordrehzahl bzw. Istgeschwindigkeit $\omega_{Akt}$ des Aktuators. Der aktuelle Wert der Motordrehzahl $\omega_{Akt}$ wird, wie oben bereits beschrieben, z.B. aus der Aktuatorposition $X_{Akt}$ ermittelt. Die Ausgangsgröße des Drehzahlreglers 32, nach einer Momentenbegrenzung 33 zur Begrenzung auf das minimal bzw. maximal zulässige Motormoment $M_{Min}$ bzw. $M_{Max}$, ist das Motormoment $M_{Akt,Soll}$.

Grundsätzlich ist auch eine alternative Realisierung des Funktionsmoduls "Aktuatorpositionsregelung" 50 möglich.

## Patentansprüche

1. Verfahren zur Regelung einer elektrohydraulischen Bremsanlage für Kraftfahrzeuge mit zumindest einer hydraulisch betätigbaren Radbremse (9), welche mittels einer elektronisch ansteuerbaren Druckbereitstellungseinrichtung (16) betätigbar ist, die eine Zylinder-Kolben-Anordnung mit einem hydraulischen Druckraum (4) umfasst, deren Kolben (3) durch einen elektromechanischen Aktuator (1) verschiebbar ist, so dass ein vorgebbarer Druck-Sollwert ($P_{V,Soll}$) in dem hydraulischen Druckraum (4) einstellbar ist, wobei ein Aktuatorposition-Istwert ($X_{Akt}$) einer Position der Druckbereitstellungseinrichtung (30) und ein Aktuatormoment-Istwert ($M_{Akt}$) des elektromechanischen Aktuators (1) ermittelt werden, und wobei mittels einer Regelvorrichtung (40) eine Stellgröße ($\omega_{Akt,Soll}$, $M_{Akt,Soll}$) zur Ansteuerung des Aktuators (1) erzeugt wird, wobei in der Regelvorrichtung (40) eine Positionsregelung (50) des Aktuators (1) durchgeführt wird, **dadurch gekennzeichnet, dass** die Positionsregelung (50) anhand des Aktuatorposition-Istwerts ($X_{Akt}$) und eines Aktuatorposition-Sollwerts ($X_{Mod,Soll}$, $X_{Akt,Soll}$) durchgeführt wird, wobei der Aktuatorposition-Sollwert ($X_{Mod,Soll}$, $X_{Akt,Soll}$) anhand des vorgegebenen Druck-Sollwerts ($P_{V,Soll}$) bestimmt, insbesondere berechnet, wird, und wobei bei der Bestimmung des Aktuatorposition-Sollwerts ($X_{Akt,Soll}$) zusätzlich der Aktuatormoment-Istwert ($M_{Akt}$) berücksichtigt wird (60, 65).

2. Verfahren nach Anspruch 1, **dadurch gekennzeichnet, dass** der Aktuatorposition-Sollwert ($X_{Mod,Soll}$, $X_{Akt,Soll}$) anhand eines vorgegebenen Zusammenhangs zwischen Druck und Position aus dem Druck-Sollwert ($P_{V,Soll}$) bestimmt wird (20).

3. Verfahren nach Anspruch 1 oder 2, **dadurch gekennzeichnet, dass** anhand des Aktuatormoment-Istwerts ($M_{Akt}$) eine Korrektur (60, 65, $\Delta X_{korr}$) eines, insbesondere ausschließlich, aus dem Druck-Sollwert ($P_{V,Soll}$) berechneten Aktuatorposition-Sollwerts ($X_{Mod,Soll}$) durchgeführt wird.

4. Verfahren nach Anspruch 3, **dadurch gekennzeichnet, dass** aus dem Druck-Sollwert ($P_{V,Soll}$) ein Aktuatormoment-Sollwert ($M_{Mod,Soll}$) bestimmt wird (61), welcher zur Korrektur (60, 65, $\Delta X_{korr}$) des Aktuatorposition-Sollwerts ($X_{Mod,Soll}$) herangezogen wird (64, 65).

5. Verfahren nach Anspruch 3 oder 4, **dadurch gekennzeichnet, dass** ein Korrektur-Aktuatorpositionswert ($\Delta X_{korr}$) anhand des Druck-Sollwerts ($P_{V,Soll}$), des Aktuatormoment-Istwerts ($M_{Akt}$) und eines Aktuator-Beschleunigungsmoments ($M_{acc}$) bestimmt wird (60).

6. Verfahren nach Anspruch 5, **dadurch gekennzeichnet, dass** der Korrektur-Aktuatorpositionswert ($\Delta X_{korr}$) zu dem aus dem Druck-Sollwert ($P_{V,Soll}$) berechneten Aktuatorposition-Sollwert ($X_{Mod,Soll}$) hinzuaddiert wird (65, $X_{Akt,Soll}$), und dass insbesondere der sich ergebende Aktuatorpositionswert als Aktuatorposition-Sollwert ($X_{Akt,Soll}$) der Positionsregelung (50) zugeführt wird.

7. Verfahren nach Anspruch 5 oder 6, **dadurch gekennzeichnet, dass** eine Differenz aus dem Aktuatormoment-Istwert ($M_{Akt}$) und dem Aktuator-Beschleunigungsmoment ($M_{acc}$) von einem aus dem Druck-Sollwert ($P_{V,Soll}$) berechneten Aktuatormoment-Sollwert ($M_{Mod,Soll}$) subtrahiert wird, dass diese Differenz ($\Delta M_{Prs}$) zu dem Korrektur-Aktuatorpositionswert ($\Delta X_{korr}$) aufintegriert wird.

8. Vorrichtung zur Regelung einer elektrohydraulischen Bremsanlage mit einer elektronisch ansteuerbaren Druckbereitstellungseinrichtung (16), in deren Druckraum (4) ein vorgebbarer Druck-Sollwert ($P_{V,Soll}$) einstellbar ist, mit einem Mittel (17) zur Ermittlung eines Aktuatorposition-Istwerts ($X_{Akt}$) einer Position der Druckbereitstellungseinrichtung (30), mit einem Mittel zur Ermittlung eines Aktuatormoment-Istwerts ($M_{Akt}$) des elektromechanischen Aktuators (1) und mit einer Regelvorrichtung (40), welche eine Stellgröße ($\omega_{Akt,Soll}$, $M_{Akt,Soll}$) zur Ansteuerung des Aktuators (1) erzeugt, wobei die Regelvorrichtung (40) eine Positionsregelvorrichtung (50, 30) umfasst, **dadurch gekennzeichnet, dass** der Positionsregelvorrichtung (50, 30) als Eingangsgrößen der Aktuatorposition-Istwert ($X_{Akt}$) und ein anhand des vorgegebenen Druck-Sollwerts ($P_{V,Soll}$) bestimmter, insbesondere berechneter, Aktuatorposition-Sollwert ($X_{Akt,Soll}$) zugeführt werden, und dass die Regelvorrichtung (40) ein erstes Funktionsmodul (20, 65) umfasst, in welchem ein erster Aktuatorposition-Sollwert ($X_{Mod,Soll}$), insbesondere anhand eines vorgegebenen Zusammenhangs zwischen Druck und Position (20), aus dem Druck-Sollwert ($P_{V,Soll}$) bestimmt wird, und in welchem anhand des Aktuatormoment-Istwerts ($M_{Akt}$) eine Korrektur (65) des ersten Aktuatorposition-Sollwerts ($X_{Mod,Soll}$) durchgeführt wird.

9. Vorrichtung nach Anspruch 8, **dadurch gekennzeichnet, dass** die Positionsregelvorrichtung (50, 30) einen Positionsregler (30) umfasst, dem ein Drehzahlregler (32) unterlagert ist.

10. Vorrichtung nach Anspruch 8 oder 9, **dadurch gekennzeichnet, dass** die Regelvorrichtung (40) ein zweites Funktionsmodul (60) umfasst, in welchem ein Korrektur-Aktuatorpositionswert ($\Delta X_{korr}$) anhand des Druck-Sollwerts ($P_{V,Soll}$), des Aktuatormoment-Istwerts ($M_{Akt}$) und eines Aktuator-Beschleunigungsmoments ($M_{acc}$) bestimmt wird.

11. Vorrichtung nach einem der Ansprüche 8 bis 10, **dadurch gekennzeichnet, dass** in der Regelvorrichtung (40) ein Verfahren gemäß einem der Ansprüche 1 bis 7 durchgeführt wird.

12. Elektrohydraulische Bremsanlage für Kraftfahrzeuge mit zumindest einer hydraulisch betätigbaren Radbremse (9), welche mittels einer elektronisch ansteuerbaren Druckbereitstellungseinrichtung (16) betätigbar ist, die eine Zylinder-Kolben-Anordnung mit einem hydraulischen Druckraum (4) umfasst, deren Kolben (3) durch einen elektromechanischen Aktuator (1) verschiebbar ist, so dass ein vorgebbarer Druck-Sollwert ($P_{V,Soll}$) in dem hydraulischen Druckraum (4) einstellbar ist, wobei die Bremsanlage ein Mittel (17) zur Ermittlung eines Aktuatorposition-Istwerts ($X_{Akt}$) einer Position der Druckbereitstellungseinrichtung (30) und ein Mittel zur Ermittlung eines Aktuatormoment-Istwerts ($M_{Akt}$) des elektromechanischen Aktuators (1) umfasst, **dadurch gekennzeichnet, dass** diese eine Steuer- und Regeleinheit (18) umfasst, in welcher ein Verfahren gemäß einem der Ansprüche 1 bis 7 durchgeführt wird, oder dass diese eine Vorrichtung gemäß einem der Ansprüche 8 bis 11 umfasst.

**Claims**

1. Method for controlling an electrohydraulic brake system for motor vehicles, comprising at least one hydraulically actuatable wheel brake (9) which can be actuated by means of an electronically activatable pressure supply unit (16) which includes a cylinder-piston arrangement having a hydraulic pressure chamber (4), the piston (3) of which is displaceable by an electromechanical actuator (1), so that a predeterminable pressure reference value ($P_{V,Soll}$) can be set in the hydraulic pressure chamber (4), an actuator position actual value ($X_{Akt}$) of a position of the pressure supply unit (16) and an actuator torque actual value ($M_{Akt}$) of the electromechanical actuator (1) being ascertained, and a manipulated variable ($\omega_{Akt,Soll}$, $M_{Akt,Soll}$) for activating the actuator (1) being generated by means of a control device (40), a position control (50) of the actuator (1) being carried out in the control device (40), **characterized in that** the position control (50) is carried out on the basis of the actuator position actual value ($X_{Akt}$) and of an actuator position reference value ($X_{Mod,Soll}$, $X_{Akt,Soll}$), the actuator position reference value ($X_{Mod,Soll}$, $X_{Akt,Soll}$) being determined, in particular calculated, on the basis of the predetermined pressure reference value ($P_{V,Soll}$), and the actuator torque actual value ($M_{Akt}$) additionally being taken into account in determining the actuator position reference value ($X_{Akt,Soll}$) (60, 65).

2. Method according to Claim 1, **characterized in that** the actuator position reference value ($X_{Mod,Soll}$, $X_{Akt,Soll}$) is determined from the pressure reference value ($P_{V,Soll}$) on the basis of a predetermined interrelationship between pressure and position (20).

3. Method according to Claim 1 or 2, **characterized in that** a correction (60, 65, $\Delta X_{korr}$) of an actuator position reference value ($X_{Mod,Soll}$) calculated, in particular exclusively, from the pressure reference value ($P_{V,Soll}$) is carried out on the basis of the actuator torque actual value ($M_{Akt}$).

4. Method according to Claim 3, **characterized in that** an actuator torque reference value ($M_{Mod,Soll}$), which is utilized for the correction (60, 65, $\Delta X_{korr}$) of the actuator position reference value ($X_{Mod,Soll}$), is determined (61) from the pressure reference value ($P_{V,Soll}$) (64, 65).

5. Method according to Claim 3 or 4, **characterized in that** a correction actuator position value ($\Delta X_{korr}$) is determined on the basis of the pressure reference value ($P_{V,Soll}$) of the actuator torque actual value ($M_{Akt}$) and of an actuator acceleration torque ($M_{acc}$) (60).

**6.** Method according to Claim 5, **characterized in that** the correction actuator position value ($\Delta X_{korr}$) is added to the actuator position reference value ($X_{Mod,Soll}$) calculated from the pressure reference value ($P_{V,Soll}$) (65, $X_{Akt,Soll}$), and **in that**, in particular, the resulting actuator position value is supplied to the position control (50) as the actuator position reference value ($X_{Akt,Soll}$).

**7.** Method according to Claim 5 or 6, **characterized in that** a difference from the actuator torque actual value ($M_{Akt}$) and the actuator acceleration torque ($M_{acc}$) is subtracted from an actuator torque reference value ($M_{Mod,Soll}$) calculated from the pressure reference value ($P_{V,Soll}$) and **in that** this difference ($\Delta M_{Prs}$) is integrated to form the correction actuator position value ($\Delta X_{korr}$).

**8.** Device for controlling an electrohydraulic brake system, comprising an electronically activatable pressure supply unit (16) in the pressure chamber (4) of which a predeterminable pressure reference value ($P_{V,Soll}$) can be set, comprising a means (17) for ascertaining an actuator position actual value ($X_{Akt}$) of a position of the pressure supply unit (16), comprising a means for ascertaining an actuator torque actual value ($M_{Akt}$) of the electromechanical actuator (1) and comprising a control device (40) which generates a manipulated variable ($\omega_{Akt,Soll}$, $M_{Akt,Soll}$) for activating the actuator (1), the control device (40) including a position control device (50, 30), **characterized in that** the actuator position actual value ($X_{Akt}$) and an actuator position reference value ($X_{Akt,Soll}$) determined, in particular calculated, on the basis of the predetermined pressure reference value ($P_{V,Soll}$) are supplied as input variables to the position control device (50, 30), and **in that** the control device (40) includes a first functional module (20, 65) in which a first actuator position reference value ($X_{Mod,Soll}$) is determined from the pressure reference value ($P_{V,Soll}$), in particular on the basis of a predetermined interrelationship between pressure and position (20), and in which a correction (65) of the first actuator position reference value ($X_{Mod,Soll}$) is carried out on the basis of the actuator torque actual value ($M_{Akt}$).

**9.** Device according to Claim 8, **characterized in that** the position control device (50, 30) includes a position controller (30) with a subordinate speed controller (32).

**10.** Device according to Claim 8 or 9, **characterized in that** the control device (40) includes a second functional module (60) in which a correction actuator position value ($\Delta X_{korr}$) is determined on the basis of the pressure reference value ($P_{V,Soll}$), of the actuator torque actual value ($M_{Akt}$) and of an actuator acceleration torque ($M_{acc}$).

**11.** Device according to any one of Claims 8 to 10, **characterized in that** a method according to any one of Claims 1 to 7 is carried out in the control device (40).

**12.** Electrohydraulic brake system for motor vehicles, comprising at least one hydraulically actuatable wheel brake (9) which can be actuated by means of an electronically activatable pressure supply unit (16) which includes a cylinder-piston arrangement with a hydraulic pressure chamber (4), the piston (3) of which is displaceable by an electromechanical actuator (1), so that a predeterminable pressure reference value ($P_{V,Soll}$) can be set in the hydraulic pressure chamber (4), the brake system including a means (17) for ascertaining an actuator position actual value ($X_{Akt}$) of a position of the pressure supply unit (16) and including a means for ascertaining an actuator torque actual value ($M_{Akt}$) of the electromechanical actuator (1), **characterized in that** said brake system includes a control and regulation unit (18) in which a method according to any one of Claims 1 to 7 is carried out, or **in that** said brake system includes a device according to any one of Claims 8 to 11.

**Revendications**

**1.** Procédé pour régler un système de freinage électrohydraulique pour des véhicules automobiles avec au moins un frein de roue (9) actionnable de façon hydraulique, qui peut être actionné au moyen d'un dispositif de production de pression (16) à commande électronique, qui comprend un agencement cylindre-piston avec une chambre de pression hydraulique (4), dont le piston (3) peut être déplacé par un actionneur électromécanique (1), de telle manière qu'une valeur de consigne de pression ($P_{V,Soll}$) prévisible puisse être réglée, dans lequel on détermine une valeur actuelle de position d'actionneur ($X_{Akt}$) d'une position du dispositif de production de pression (16) et une valeur actuelle de couple d'actionneur ($M_{Akt}$) de l'actionneur électromécanique (1), et dans lequel on produit au moyen d'un dispositif de réglage (40) une grandeur de réglage ($\omega_{Akt,Soll}$, $M_{Akt,Soll}$) pour la commande de l'actionneur (1), dans lequel on effectue dans le dispositif de réglage (40) un réglage de position (50) de l'actionneur (1), **caractérisé en ce que** l'on effectue le réglage de position (50) à l'aide de la valeur actuelle de position d'actionneur ($X_{Akt}$) et d'une valeur de consigne de position d'actionneur ($X_{Mod,Soll}$, $X_{Akt,Soll}$), dans lequel on détermine, en particulier on calcule, la valeur de consigne de position d'actionneur ($X_{Mod,Soll}$, $X_{Akt,Soll}$) à l'aide de la valeur de consigne de pression prédéterminée ($P_{V,Soll}$), et dans lequel on tient compte en plus (60, 65) de la valeur actuelle de couple d'actionneur ($M_{Akt}$) lors de la détermination de la valeur de consigne de position d'actionneur ($X_{Akt,Soll}$).

2. Procédé selon la revendication 1, **caractérisé en ce que** l'on détermine la valeur de consigne de position d'actionneur ($X_{Mod,Soll}$, $X_{Akt,Soll}$) à l'aide d'une relation prédéterminée entre la pression et la position (20) à partir de la valeur de consigne de pression ($P_{V,Soll}$).

3. Procédé selon la revendication 1 ou 2, **caractérisé en ce que** l'on effectue à l'aide de la valeur actuelle de couple d'actionneur ($M_{Akt}$) une correction (60, 65, $\Delta X_{korr}$) d'une valeur de consigne de position d'actionneur ($X_{Mod,Soll}$) calculée, en particulier exclusivement, à partir de la valeur de consigne de pression ($P_{V,Soll}$).

4. Procédé selon la revendication 3, **caractérisé en ce que** l'on détermine (61) à partir de la valeur de consigne de pression ($P_{V,Soll}$) une valeur de consigne de couple d'actionneur ($M_{Mod,Soll}$), que l'on utilise (64, 65) pour la correction (60, 65, $\Delta X_{korr}$) de la valeur de consigne de position d'actionneur ($X_{Mod,Soll}$).

5. Procédé selon la revendication 3 ou 4, **caractérisé en ce que** l'on détermine (60) une valeur de correction de position d'actionneur ($\Delta X_{korr}$) à l'aide de la valeur de consigne de pression ($P_{V,Soll}$), de la valeur actuelle de couple d'actionneur ($M_{Akt}$) et d'un couple d'accélération d'actionneur ($M_{acc}$).

6. Procédé selon la revendication 5, **caractérisé en ce que** l'on ajoute (65, $X_{Akt,Soll}$) la valeur de correction de position d'actionneur ($\Delta X_{korr}$) à la valeur de consigne de position d'actionneur ($X_{Mod,Soll}$) calculée à partir de la valeur de consigne de pression ($P_{V,Soll}$) et **en ce que** l'on envoie en particulier au réglage de position (50) la valeur de position d'actionneur comme valeur de consigne de position d'actionneur ($X_{Akt,Soll}$).

7. Procédé selon la revendication 5 ou 6, **caractérisé en ce que** l'on soustrait une différence entre la valeur actuelle de couple d'actionneur ($M_{Akt}$) et le couple d'accélération d'actionneur ($M_{acc}$) d'une valeur de consigne de couple d'actionneur ($M_{Mod,Soll}$) calculée à partir de la valeur de consigne de pression ($P_{V,Soll}$), et **en ce que** l'on intègre cette différence ($\Delta M_{Prs}$) à la valeur de correction de position d'actionneur ($\Delta X_{korr}$).

8. Dispositif pour régler un système de freinage électrohydraulique avec un dispositif de production de pression à commande électronique (16), dans la chambre de pression (4) duquel une valeur de consigne de pression prévisible ($P_{V,Soll}$) peut être réglée, avec un moyen (17) pour la détermination d'une valeur actuelle de position d'actionneur ($X_{Akt}$) d'une position du dispositif de production de pression (16), avec un moyen pour la détermination d'une valeur actuelle de couple d'actionneur ($M_{Akt}$) de l'actionneur électromécanique (1) et avec un dispositif de réglage (40), qui produit une grandeur de réglage ($\omega_{Akt,Soll}$, $M_{Akt,soll}$) pour la commande de l'actionneur (1), dans lequel le dispositif de réglage (40) comprend un dispositif de réglage de position (50, 30), **caractérisé en ce que** la valeur actuelle de position d'actionneur ($X_{Akt}$) et une valeur de consigne de position d'actionneur ($X_{Akt,Soll}$) déterminée, en particulier calculée, à l'aide de la valeur de consigne de pression prédéterminée ($P_{V,Soll}$) sont envoyées comme grandeurs d'entrée au dispositif de réglage de position (50, 30), et **en ce que** le dispositif de réglage (40) comprend un premier module fonctionnel (20, 65), dans lequel une première valeur de consigne de position d'actionneur ($X_{Mod,Soll}$) est déterminée à partir de la valeur de consigne de pression ($P_{V,Soll}$), en particulier à l'aide d'une relation prédéterminée entre la pression et la position (20), et dans lequel une correction (65) de la première valeur de consigne de position d'actionneur ($X_{Mod,Soll}$) est effectuée à l'aide de la valeur actuelle de couple d'actionneur ($M_{Akt}$).

9. Dispositif selon la revendication 8, **caractérisé en ce que** le dispositif de réglage de position (50, 30) comprend un régulateur de position (30), auquel un régulateur de vitesse de rotation (32) est subordonné.

10. Dispositif selon la revendication 8 ou 9, **caractérisé en ce que** le dispositif de réglage (40) comprend un deuxième module fonctionnel (60), dans lequel une valeur de correction de position d'actionneur ($\Delta X_{korr}$) est déterminée à l'aide de la valeur de consigne de pression ($P_{V,Soll}$), de la valeur actuelle de couple d'actionneur ($M_{Akt}$) et d'un couple d'accélération d'actionneur ($M_{acc}$).

11. Dispositif selon l'une quelconque des revendications 8 à 10, **caractérisé en ce qu'**un procédé selon l'une quelconque des revendications 1 à 7 est exécuté dans le dispositif de réglage (40).

12. Système de freinage électrohydraulique pour des véhicules automobiles avec au moins un frein de roue (9) actionnable de façon hydraulique, qui peut être actionné au moyen d'un dispositif de production de pression (16) à commande électronique, qui comprend un agencement cylindre-piston avec une chambre de pression hydraulique (4), dont le piston (3) peut être déplacé par un actionneur électromécanique (1), de telle manière qu'une valeur de consigne de pression prévisible ($P_{V,Soll}$) puisse être réglée dans la chambre de pression hydraulique (4), dans lequel le système de freinage comprend un moyen (17) pour la détermination d'une valeur actuelle de position d'actionneur ($X_{Akt}$) d'une position du dispositif de production de pression (16) et un moyen pour la détermination d'une valeur actuelle de couple d'actionneur ($M_{Akt}$) de l'actionneur électromécanique (1), **caractérisé en ce que** celui-ci comprend une unité de commande et de réglage (18), dans laquelle un procédé selon l'une quelconque des revendications 1 à 7 est exécuté, ou **en ce que** celui-ci comprend un dispositif selon l'une quelconque des revendications 8 à 11.

Fig. 1

EP 2 668 075 B1

Fig. 2

EP 2 668 075 B1

**EP 2 668 075 B1**

**IN DER BESCHREIBUNG AUFGEFÜHRTE DOKUMENTE**

**In der Beschreibung aufgeführte Patentdokumente**

- WO 2008025797 A1
- DE 102010040097 A1
- DE 102011076675
- DE 19543583 C1
- DE 102009054985